# EUROPEAN PATENT APPLICATION

(11) **EP 1 108 772 A2**
(43) Date of publication of application: **20.06.2001**
(21) Application number: 00126970.3
(22) Date of filing: 08.12.2000
(51) Int. Cl.: C09K 11/81

(54) **Rare earth phosphate, its production process and rare earth phosphate phosphor**

(30) Priority: 16.12.1999 JP 35767599
(71) Applicant: KASEI OPTONIX, LTD., Kanagawa-ken (JP)
(72) Inventor: Otsuka, Reiji, Kanagawa-ken (JP)
(74) Representative: ter Meer, Nicolaus, Dipl.-Chem., Dr.

(57) **Abstract**

A rare earth phosphate which has a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, and which has a powder reflectance after calcination at a temperature of from 120 to 900°C in the air, of at least 99% of the reflectance of a MgO powder at a wavelength of 490 nm, its production process, a phosphor using said rare earth phosphate and its production process.

## Description

The present invention relates to a rare earth phosphate and its production process, and a rare earth phosphate phosphor and its production process.

A rare earth phosphate phosphor is known to have excellent luminescence properties, and many types of rare earth phosphate phosphors have been developed and used practically for fluorescent lamps and for cathode ray tube from the start of nineteen-seventies.

In the field of fluorescent lamps for general lightening, a three-wave range light emitting fluorescent lamp which simultaneously satisfies high color rendering and high efficiency has been developed and used practically. As a phosphor to be used for the three-wave range light emitting fluorescent lamp, ones having phosphors of three types including red, green and blue having a relatively narrow emission spectrum distribution mixed in an appropriate proportion, are used. Among such phosphors, a cerium (Ce) and terbium (Tb)-activated lanthanum phosphate, which is one of rare earth phosphate phosphors, is used practically as a representative green phosphor for said three-wave range light emitting fluorescent lamp. Further, a cerium (Ce) -activated yttrium phosphate phosphor is used for a fluorescent lamp emitting ultraviolet light, together with a lead (Pb)-activated barium silicate phosphor or a europium (Eu)-activated strontium borate phosphor.

A fluorescent lamp has such a drawback that the initial brightness of the fluorescent lamp tends to decrease, and the retention ratio of the emission output tends to decrease, due to heat treatment of a coated fluorescent screen at a temperature of from 500 to 650°C to remove a solvent or a binder in a phosphor coating liquid, and due to heating at a temperature of from 600 to 850°C so as to form a glass valve into a desired shape.

Further, in a case of a fluorescent lamp of high load type such as a compact fluorescent lamp used in recent years instead of an incandescent lamp, an arc tube having a small tube diameter is employed, the tube wall load is high as compared with a conventional straight tube or round tube fluorescent lamp, and the tube wall temperature will be at least 100°C during lighting of the lamp. Accordingly, if a phosphor for a conventional three-wave range light emitting fluorescent lamp is used, the lamp tends to grow dim or the color may change due to increase in the tube wall temperature with the passage of lighting time.

Particularly, as a phosphor to be applied to a fluorescent lamp of high load type, one having a decrease in emission intensity due to increase in temperature of the phosphor layer (phosphor) (hereinafter referred to as temperature quenching) of as small as possible is required. Likewise, as a rare earth phosphate phosphor to be used as a green phosphor for a three-wave range light emitting fluorescent lamp, one which is stable against the heat treatment temperature in a process for producing a fluorescent lamp, which has a small decrease in initial brightness or retention ratio of the emission output, and which has a temperature quenching of as small as possible, is required.

Here, as a process for producing a rare earth phosphate phosphor, a dry method which comprises mixing oxides of rare earth elements constituting a phosphor matrix and a phosphate compound such as diammonium hydrogen phosphate together with a compound containing an activating element in predetermined amounts, followed by calcination to conduct a reaction between solids, and a wet method which comprises mixing a solution containing rare earth elements constituting a phosphor matrix and a solution containing phosphate ions such as phosphoric acid together with a solution containing an activating element to form a precipitate of a rare earth phosphate as a precursor for a phosphor in the solution, and subjecting the precursor to solid-liquid separation, followed by calcination, are mentioned.

In order to increase the emission efficiency and the yield of the rare earth phosphate phosphor, it is necessary to make the composition of the phosphor to be as close to the stoichiometric composition as possible. However, with a dry method, it is difficult to produce a rare earth phosphate phosphor purely having a stoichiometric composition alone, and as a result of the reaction between the solids, excessive phosphorus which does not react with a rare earth element is likely to remain as an impurity in a form of e.g. an oxide, and it is thereby difficult to obtain a phosphor having a stoichiometrically highly pure composition. In order to obtain a rare earth phosphate phosphor which is compositionally uniform, it is more suitable to employ a wet method than a dry method.

In a case of producing a rare earth phosphate phosphor by a wet method, a precipitate of a rare earth phosphate as a precursor for a phosphor is formed firstly, and the precipitate is subjected to calcination to form a rare earth phosphate phosphor. The properties of the phosphor such as a particle size distribution and emission properties are greatly influenced by the properties of the rare earth phosphate as a precursor thereof. Accordingly, it is necessary to exclude impurities and to control the particle size distribution of the rare earth phosphate to be formed firstly. However, the particle size of the phosphor obtained by a wet method tends to be very small, washing and the solid-liquid separation tend to be difficult, control of the particle size and the particle size distribution tends to be difficult, and a large amount of impurities present in a medium of the precipitate of the rare earth phosphate is likely to be mixed in the rare earth phosphate phosphor.

Accordingly, many improved methods with respect to production of a rare earth phosphate phosphor by a dry or wet method have been proposed. However, they are not necessarily satisfactory in view of the initial brightness, suppression of decrease in the retention ratio of the brightness, and reduction of the temperature quenching, and further improvements have thereby been required with respect to a rare earth phosphate phosphor and its production process considering the above points.

The present invention is to provide a rare earth phosphate, of which the particle size can easily be controlled, a rare earth phosphate phosphor which hardly causes decrease in the initial brightness in a lamp production process, decrease in the brightness retention ratio in a case of continuous lighting and temperature quenching when used as a fluorescent screen for a fluorescent lamp, and their production processes.

In order to achieve the above objects, the present inventors have conducted extensive studies on a process for producing a rare earth phosphate phosphor by a wet method, and as a result, have found that a rare earth phosphate phosphor having a desired particle size can be produced with a high yield by controlling production conditions such as conditions for precipitating a rare earth phosphate as a precursor for the phosphor, and that when said phosphor is used as a fluorescent screen for a fluorescent lamp, the decrease in the initial brightness of the fluorescent lamp and the brightness retention ratio in a case of continuous lighting tends to be small, and the temperature quenching tends to be small. The present invention has been accomplished on the basis of these discoveries. The constitution of the present invention is as follows.
(1) A rare earth phosphate which has a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, and which has a powder reflectance after calcination at a temperature of from 120 to 900°C in the air, of at least 99% of the reflectance of a MgO powder at a wavelength of 490 nm.
(2) A process for producing a rare earth phosphate having a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, which comprises preparing a first solution containing Ln ions (Ln⁺³), cerium ions (Ce⁺³) and terbium ions (Tb⁺³) in amounts which stoichiometrically satisfy the above compositional formula and phosphate ions (PO₄⁻³) at a concentration higher than the stoichiometric amount which satisfies the above compositional formula, each in an ionic state, preparing a second solution containing nitrate ions (NO₃⁻¹) and ammonium ions (NH₄⁻¹), each in an ionic state, and having a pH within a range of from 1.0 to 2.0, and adding the first solution into the second solution to form a precipitate of a phosphate.
(3) A process for producing a rare earth phosphate phosphor having a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, which comprises preparing a first solution containing Ln ions (Ln⁺³), cerium ions (Ce⁺³) and terbium ions (Tb⁺³) in amounts which stoichiometrically satisfy the above compositional formula and phosphate ions (PO₄⁻³) at a concentration higher than the stoichiometric amount which satisfies the above compositional formula, more preferably from 1.01 to 1.10 times the stoichiometric amount, each in an ionic state, preparing a second solution containing nitrate ions (NO₃⁻¹) and ammonium ions (NH₄⁺¹), each in an ionic state, and having a pH within a range of from 1.0 to 2.0, more preferably from 1.0 to 1.3, adding the first solution into the second solution to precipitate a rare earth phosphate, and calcining said rare earth phosphate in a reducing atmosphere at a temperature of from 900 to 1,300°C.
(4) A rare earth phosphate phosphor which has a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, and which contains from 1 to 500 ppm, more preferably from 100 to 400 ppm, of aluminum (Al).
(5) A process for producing a rare earth phosphate phosphor having a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, which comprises preparing a first solution containing Ln ions (Ln⁺³), cerium ions (Ce⁺³) and terbium ions (Tb⁺³) in amounts which stoichiometrically satisfy the above compositional formula and phosphate ions (PO₄⁻³) at a concentration higher than the stoichiometric amount which satisfies the above compositional formula, more preferably from 1.01 to 1.10 times the stoichiometric amount, each in an ionic state, preparing a second solution containing nitrate ions (NO₃⁻¹) and ammonium ions (NH₄⁺¹), each in an ionic state, and having a pH within a range of from 1.0 to 2.0, more preferably from 1.0 to 1.3, adding the first solution into the second solution to precipitate a rare earth phosphate, and calcining a mixture of said rare earth phosphate with from 10 to 50,000 ppm, more preferably from 1,000 to 10,000 ppm (as calculated as aluminum) of an aluminum compound in a reducing atmosphere at a temperature of from 900 to 1,300°C.

Now, the present invention will be described in detail with reference to the preferred embodiments.

In the accompanying drawings:
Figure 1 is a graph illustrating the relation between the pH value of a reaction solution at the time of forming a precipitate of a rare earth phosphate and the reflectance of the obtained rare earth phosphate.
Figure 2 is a graph illustrating the relation between the pH value of a reaction solution at the time of forming a precipitate of a rare earth phosphate and the yield of the precipitate of the rare earth phosphate.
Figure 3 is a graph illustrating the relation between the pH value of a reaction solution at the time of forming a precipitate of a rare earth phosphate and the emission brightness of a rare earth phosphate phosphor formed from the obtained rare earth phosphate, after baked.
Figure 4 is a graph illustrating the temperature dependency of the emission brightness of a rare earth phosphate phosphor.

To produce the rare earth phosphate of the present invention, a compound of Ln, a compound of Ce and a compound of Tb in amounts which satisfy the compositional formula LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, are dissolved in water firstly. As each of these rare earth compounds, a water soluble salt such as a nitrate, a sulfate or a chloride of Ln, Ce or Tb may be employed, or one having an oxide of the above rare earth element preliminarily dissolved in a mineral acid such as nitric acid may also be used. Phosphoric acid is added to this liquid having the compounds of Ln, Ce and Tb dissolved therein to prepare a first solution.

The amount of phosphoric acid contained in the first solution is a stoichiometrically excess amount over the above compositional formula. However, it is preferred to make the amount of phosphoric acid in the first solution to be slightly larger than the stoichiometric amount so that the molar ratio of the total amount of phosphate ions to the total amount of rare earth element ions { (PO₄)⁻³/ (Ln+Ce+Tb)⁺³) } is from 1.05 to 1.10, whereby deposition of excessive phosphate ions as impurities on the surface of the rare earth phosphate to be obtained can be prevented. In such a case, it is necessary to control e.g. the liquid temperature and pH so that rare earth element ions and phosphate ions are present in the first solution each in an ionic state, and no precipitate of a rare earth phosphate is formed in the first solution.

Then, separately from the first solution, nitric acid and aqueous ammonia each in a predetermined amount are mixed to prepare a second solution comprising ammonium ions and nitrate ions and having its pH value adjusted to be from 1.0 to 2.0, preferably from 1.0 to 1.3.

Then, the first solution is gradually added dropwise to the second solution with stirring, whereupon a precipitate of a rare earth phosphate is gradually formed in the second solution. In a conventional process for producing a rare earth phosphate by wet method, simultaneously with mixing of a solution containing rare earth element ions and a solution containing phosphate ions, a precipitate of a phosphate is immediately formed in the solution mixture. Accordingly, fine particulate or colloidal rare earth phosphate is formed, and it tends to be difficult to separate it by filtration or wash it with water, or it tends to be difficult to control the particle size of phosphate particles to be formed.

However, according to the process for producing a rare earth phosphate of the present invention, the first solution in which ions of rare earth elements and phosphate ions co-exist each in an ionic state, and a rare earth phosphate is not formed yet, is added to the second solution in which ammonium ions and nitrate ions coexist, and of which the pH is adjusted to be within a specific range, so as to form a rare earth phosphate in the second solution. Accordingly, the rate of formation of the precipitate of a rare earth phosphate and the rate of the growth of the particles can be freely adjusted by e.g. the amount of the first solution to be added and the addition rate, and a precipitate of a rare earth phosphate having the particle size controlled to be a desired size can be obtained.

As mentioned hereinafter, when a specific amount of aluminum (Al) is incorporated in the rare earth phosphate phosphor, the temperature quenching of said phosphor will be reduced, and when a fluorescent screen is formed by using said phosphor, the coating properties tend to be good. In a case where a rare earth phosphate phosphor is prepared by using the rare earth phosphate of the present invention, Al may preliminarily be incorporated into the rare earth phosphate physically. For example, alumina may further be added to the solution containing the precipitate of a rare earth phosphate obtained as mentioned above, followed by thorough stirring, removal of water and solid-liquid separation in order that alumina is attached to the surface of precipitate particles or is present among particles to obtain a rare earth phosphate containing alumina. The alumina to be added is suitably from 10 to 50,000 ppm as calculated as aluminum (Al). As the aluminum (Al) source to be added, preferred is alumina, but other than alumina, an aluminum compound which is not soluble in the second solution, and which will form alumina when calcined, such as aluminum hydroxide, may also be used. If the amount of alumina added in the present invention is less than 10 ppm as calculated as aluminum (Al), the above effects will be inadequate, and if it exceeds 50,000 ppm, the emission brightness of the rare earth phosphate phosphor tends to decrease. Here, the preferred amount of aluminum is from 1,000 to 10,000 ppm.

One of the characteristics of the rare earth phosphate thus obtained is that it does not show body color and its color is close to white as compared with a conventional rare earth phosphate, even after it is subjected to a heat treatment. In a case where the obtained rare earth phosphate is heated in the air at a temperature of from 120 to 900°C, the powder reflectance is high after the heat treatment at any temperature, and when the powder reflectance is measured at a wavelength of 490 nm, it shows a reflectance of at least 99% to the reflectance 100 of a MgO powder. Of a rare earth phosphate phosphor employing, as a raw material, such a rare earth phosphate having a high reflectance even after the heat treatment, the initial brightness after the heat treatment is high, and the decrease in the brightness retention ratio is small.

The rare earth phosphate phosphor of the present invention can be produced in the same manner as in a conventional process, except that the above rare earth phosphate is used as a raw material for the phosphor. Namely, the above rare earth phosphate or one having a flux such as a lithium compound or a boron compound added to the phosphate and mixed as the case requires, is put in a heat resistant container and calcined in a reducing atmosphere at a temperature of from 900 to 1,300°C for from 1 to 10 hours, followed by pulverization, washing, drying and classification, to produce the rare earth phosphate phosphor of the present invention.

Here, in a case where a rare earth phosphate having alumina coated on the surface or mixed therein is used as a raw material for the phosphor, the phosphate may directly be calcined as mentioned above. Further, in a case where a rare earth phosphate having no alumina coated or mixed is used as a raw material for the phosphor, a predetermined amount of alumina is added to the phosphate, followed by thorough mixing, and the phosphate is calcined. The rare earth phosphate phosphor of the present invention thus obtained contains from 1 to 500 ppm of aluminum (Al) in the case of a phosphor having alumina added to its raw material. The degree of the temperature quenching of the rare earth phosphate phosphor containing Al is extremely low as compared with a phosphate phosphor containing no Al. If the aluminum (Al) content in the phosphor is less than 1 ppm, substantially no effect of suppressing the temperature quenching tends to be confirmed, and if it exceeds 500 ppm, the emission brightness tends to decrease even at room temperature. A preferred range of the aluminum content in the phosphor is from 100 to 400 ppm. In a case where a rare earth phosphate phosphor is produced by using the rare earth phosphate of the present invention, a rare earth phosphate having from 10 to 50,000 ppm as calculated as Al of an aluminum compound such as alumina mixed therein or attached thereto, may be used, so that the Al content in the phosphor will be from 1 to 500 ppm.

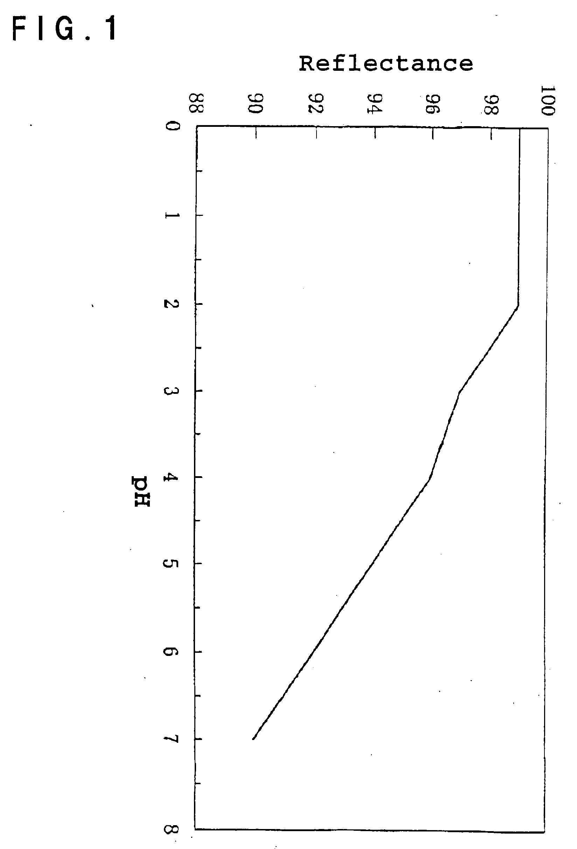

Figure 1 is a graph illustrating the relation between the pH value of the second solution and the powder reflectance of the rare earth phosphate. Particularly, to produce a rare earth phosphate represented by the compositional formula La_{0.55}Ce_{0.30}Tb_{0.15}PO₄ and containing no Al, the first solution containing rare earth ions and phosphate ions is added to the second solution containing ammonium ions and nitrate ions for reaction to form a precipitate. The powder reflectance of the rare earth phosphate to be formed, when the pH value of the second solution is changed within a range of from 0 to 7.0 in this step, is illustrated in Figure 1. In Figure 1, the horizontal axis indicates the pH value of the second solution, and the vertical axis indicates the powder reflectance of the rare earth phosphate obtained from the second solution having each pH value, at a wavelength of 490 nm as a relative value to the reflectance of a MgO powder.

As evident from Figure 1, when the pH value of the second solution to which the first solution is added is adjusted to be at most 2, the reflectance of the rare earth phosphate to be obtained is brought to be at least 99%, but if the pH value of the second solution exceeds 2, the reflectance suddenly decreases. This indicates that Ce³⁺ and Tb³⁺ are originally stable in a trivalent state at a pH of at most 2. It is considered that along with increase in the pH, Ce³⁺ and Tb³⁺ are likely to be oxidized into an oxidized state of a higher order, and Ce and Tb in an oxidized state of a higher order are subjected to a heat treatment and changed into oxides having a body color, thus lowering the reflectance of the rare earth phosphate.

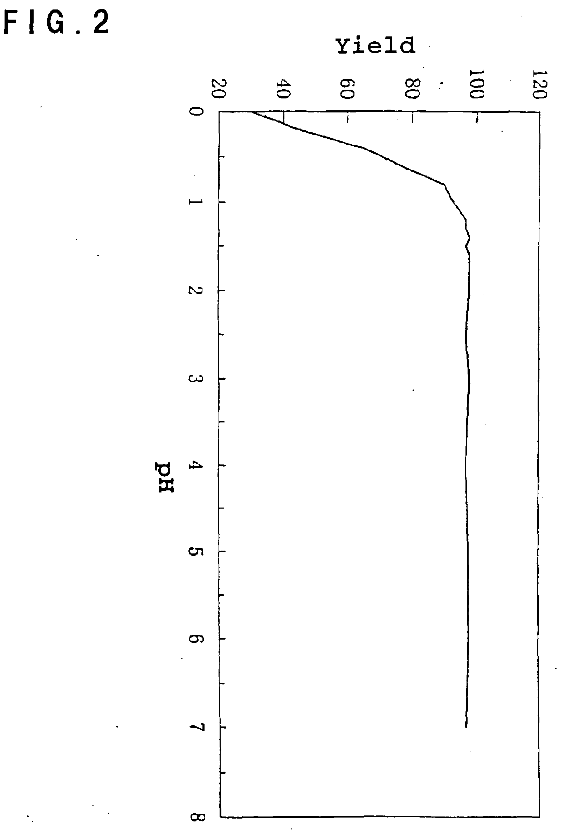

Figure 2 is a graph illustrating the yield of the rare earth phosphate to be obtained when the pH value of the second solution is changed within a range of from 0 to 7.0, when the first solution is added to the second solution for reaction to produce a rare earth phosphate (La_{0.55}Ce_{0.30}Tb_{0.15}PO₄) containing no Al, in the same manner as samples for Figure 1. In Figure 2, the horizontal axis indicates the pH value of the second solution, and the vertical axis indicates the yield of the rare earth phosphate (La_{0.55}Ce_{0.30}Tb_{0.15}PO₄) when the second solution has a pH value indicated by the horizontal axis. Here, the yield of the rare earth phosphate in Figure 2 indicates the weight of the rare earth phosphate after the precipitate of the rare earth phosphate (La_{0.55}Ce_{0.30}Tb_{0.15}PO₄) obtained from the second solution is calcined at 900°C, by percentage to the theoretical value of the rare earth phosphate calculated from the rare earth element (Ln) ions and phosphate ions charged to the first solution to form the precipitate.

As evident from Figure 2, the yield of the rare earth phosphate (La_{0.55}Ce_{0.30}Tb_{0.15}PO₄) is so high as at least 97% when the pH value of the second solution (solution containing ammonium ions and nitrate ions) to which the first solution (solution mixture of rare earth element ions and phosphate ions) is added is approximately at least 1.2. The yield significantly decreases when the pH value is less than 1.0.

Further, it is confirmed that the residual amounts of La, Ce and Tb in the supernatant liquid of the second solution after the phosphate is precipitated are at most 10 ppm at a pH of at least 1.2, whereas when the pH becomes lower than 1.0, the residual amounts increase, particularly the amount of La increases, although not shown. Accordingly, it is estimated that most of lanthanum, cerium and terbium react to form a uniform precipitate of a phosphate at a pH of at least 1.2, but when the pH becomes low, a non-uniform precipitate having a low lanthanum composition is formed.

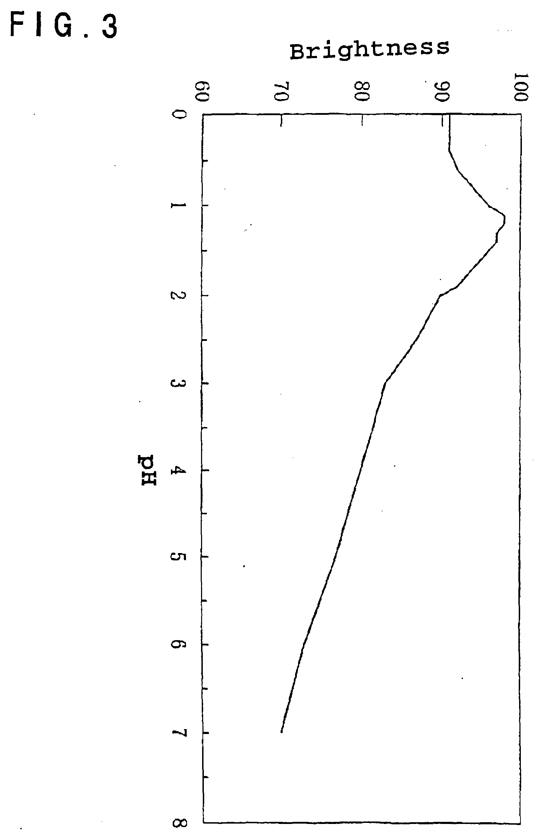

Using, as a raw material, a rare earth phosphate containing no Al (La_{0.55}Ce_{0.30}Tb_{0.15}PO₄) obtained in the same manner as samples for Figures 1 and 2, boric acid and lithium tetraborate are added as fluxes, followed by calcination at 1,200°C for 2 hours to prepare a rare earth phosphate phosphor (La_{0.55}Ce_{0.30}Tb_{0.15}PO₄). In Figure 3 is shown the relation between the pH of the second solution and the emission brightness of this phosphor after further baked at 800°C in the air, in an excited state with ultraviolet light. In Figure 3, the horizontal axis indicates the pH value of the second solution, and the brightness indicated by the vertical axis is the emission brightness of the obtained rare earth phosphate phosphor (La_{0.55}Ce_{0.30}Tb_{0.15}PO₄) after baked, in an excited state with ultraviolet light of 253.7 nm, as a relative value to the emission brightness of a conventional rare earth phosphate phosphor (La_{0.55}Ce_{0.30}Tb_{0.15}PO₄) used as a standard phosphor.

As evident from Figure 3, with respect to the brightness of the rare earth phosphate phosphor (La_{0.55}Ce_{0.30}Tb_{0.15}PO₄) after baked at 800°C in the air after its production, it is at least 90% when the pH value of the second solution in the process for preparing the rare earth phosphate as a precursor for this phosphor is at most 2.0, and when the pH value is from 1.1 to 1.2, it reaches the maximum (98%), and the decrease in the initial brightness after the heat treatment is small. Of the phosphate from a precursor obtained by adding the first solution into the second solution having a pH value of higher than 2.0, the initial brightness after the baking treatment significantly decreases.

Accordingly, the initial brightness of the rare earth phosphate phosphor produced by a wet method, after the baking treatment, significantly decreases when the pH value of the second solution in which the precipitate of the rare earth phosphate as a precursor is formed is higher than 2. This pH value corresponds to the critical pH value of the second solution as a precipitation condition at which the reflectance of the rare earth phosphate as a precursor for the rare earth phosphate phosphor significantly decreases (refer to Figure 1). This is considered to be because the Ce ions and Tb ions are stable in a trivalent state at a pH of at most 2.0, as mentioned above, whereas the Ce ions and Tb ions are likely to be oxidized into an oxidized state of a higher order when the pH value of the second solution becomes higher than 2. In this manner, conditions for production of the rare earth phosphate significantly affect the brightness (heat deterioration) of the rare earth phosphate phosphor after the baking treatment.

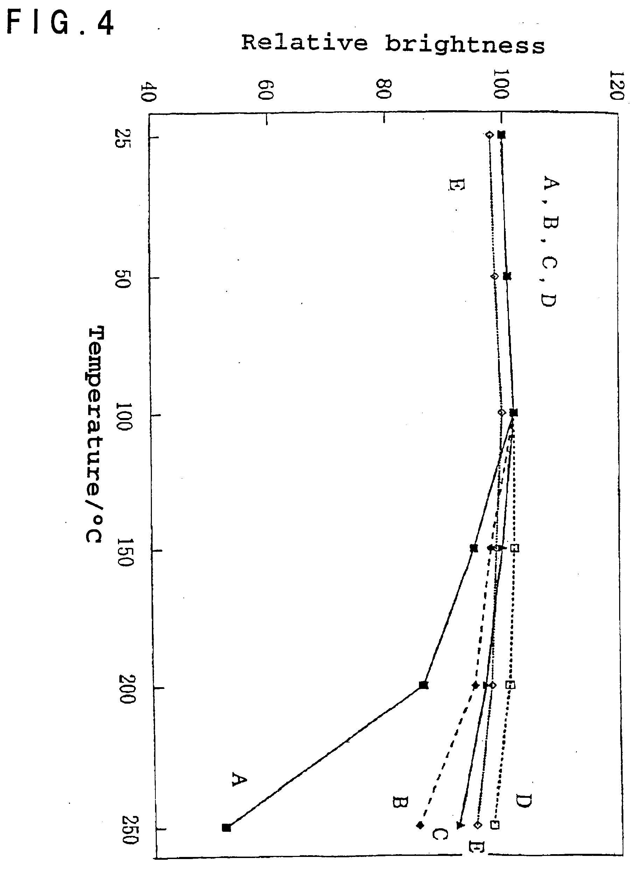

The first solution containing rare earth element ions and phosphate ions in predetermined amounts is added to the second solution containing ammonium ions and nitrate ions and having the pH value adjusted to be 1.2, to form four precipitates of a rare earth phosphate having the same composition. To each of the precipitates, one of alumina suspensions containing alumina in different amounts, which are prepared separately, is added and mixed, followed by removal of water, to prepare four types of rare earth phosphates having alumina attached. They are subjected to calcination as raw materials, to obtain four types of rare earth phosphate phosphors having a compositional formula of La_{0.55}Ce_{0.30}Tb_{0.15}PO₄ and containing aluminum in an amount of 10 ppm, 200 ppm, 350 ppm and 500 ppm, respectively. Figure 4 is a graph illustrating the temperature dependency of the emission brightness of the phosphors. Regarding lines indicating phosphors in Figure 4, ■ indicates one having no alumina added (A), ◆ indicates one having an alumina content of 10 ppm (B), ▲ indicates one having an alumina content of 200 ppm (C), □ indicates one having an alumina content of 350 ppm (D), and ◇ indicates one having an alumina content of 500 ppm (E).

The temperature dependency of the emission brightness of the phosphor is measured in such a manner that a phosphor sample is put on a sample plate made of a metal, the temperature of the sample plate is increased with a heater, the phosphor sample is irradiated with ultraviolet light of 253.7 nm while heating to make the phosphor emit light, and the emission brightness of the phosphor and the temperature of the sample plate at that time are measured. In Figure 4, the horizontal axis indicates the temperature of the sample plate on which the phosphor is put, and the vertical axis indicates the emission brightness of the phosphor. Here, the emission brightness indicated by the vertical axis is represented by a relative value where the emission brightness of a standard phosphor which is the same rare earth phosphate phosphor as the standard phosphor used for Figure 3, excited with ultraviolet light of 253.7 nm at room temperature (25°C) is 100. In Figure 4, the curve A indicates the phosphor of the present invention containing no Al, and the curves B, C, D and E indicate the phosphors of the present invention having an Al content of 10 ppm, 200 ppm, 350 ppm and 500 ppm, respectively.

As evident from Figure 4, in the case of the rare earth phosphate phosphor of the present invention containing no Al, the emission brightness suddenly decreases when its temperature is raised to the vicinity of 100°C in the same manner as in a conventional rare earth phosphate phosphor, and the temperature quenching is not reduced. On the other hand, of the rare earth phosphate phosphor of the present invention having Al incorporated therein, decrease in the emission brightness is very small even when the temperature is raised to at least 200°C, and substantially no temperature quenching is confirmed.

The above description is made with regard to the rare earth phosphate and the rare earth phosphate phosphor wherein Ln is La, but the same results are confirmed in a case where Ln is Y or Gd.

Now, the present invention will be explained in further detail with reference to Examples. However, it should be understood that the present invention is by no means restricted to such specific Examples.

### EXAMPLE 1

61.0 g of cerium oxide (CeO₂), 33.1 g of terbium oxide (Tb₄O₇) and 105.9 g of lanthanum oxide (La₂O₃) were added to pure water, followed by thorough stirring to prepare a suspension of the rare earth oxides, and nitric acid having a specific gravity of 1.42 was gradually added thereto to dissolve the rare earth oxides. Here, in order that the rare earth oxides would be dissolved easily, the liquid temperature was raised to 60°C with stirring while adding 35% hydrogen peroxide thereto, and a transparent aqueous solution of a rare earth nitrate in a total of 1,000 mℓ was obtained.

Then, the obtained aqueous solution of a rare earth nitrate was cooled to 25°C, and 144 g of 85% phosphoric acid together with pure water was dropwise added thereto with stirring and mixed, to prepare a first solution having a total ion concentration of rare earth ions of Ce, Tb and La of 0.81 mol/ℓ, and a ratio of (total amount of rare earth ions):(phosphate ions) of 1:1.06.

Separately, 100 mℓ of 28% ammonia water was put into 500 mℓ of pure water, and nitric acid having a specific gravity of 1.42 was gradually added thereto with stirring to adjust the pH to be 1.2, to prepare a second solution.

Then, the first solution was dropwise added gradually to the second solution at a dropping rate of 400 mℓ/hr to form a precipitate of a rare earth phosphate. Here, since the pH value of the second solution changed every moment with addition of the first solution, ammonium water was added together in each case so that the pH of the second solution would be always about 1.2.

Then, the obtained precipitation of a rare earth phosphate was washed by decantation, separated by filtration and dried at 120°C, followed by classification with a sieve of opening 60 micron to obtain 274 g of a rare earth phosphate of Example 1. The theoretical yield was 280.4 g as calculated from the blending amount of the raw materials, and accordingly the yield was 98%.

The composition of the rare earth phosphate of Example 1 was La_{0.55}Ce_{0.30}Tb_{0.15}(PO₄)_{1.02}, the powder reflectance at a wavelength of 490 nm was 99% of the reflectance of a magnesium oxide powder, and no body color was confirmed in appearance.

Then, 240 g of the rare earth phosphate of Example 1, 1.2 g of alumina (Al₂O₃), 2,4 g of lithium tetraborate (Li₂B₄O₇) as a flux and 24 g of boric acid (H₃BO₃) as a flux were weighed, and they were adequately mixed and put in a quartz crucible, followed by calcination in an atmosphere of nitrogen gas containing 2% of hydrogen at 1,200°C for 2 hours. The obtained calcined product was stepwise subjected to pulverization, washing, drying and classification, to obtain a rare earth phosphate phosphor of Example 1 having a compositional formula of La_{0.55}Ce_{0.30}Tb_{0.15}PO₄ and containing 220 ppm of Al.

The emission brightness of the rare earth phosphate phosphor of Example 1 when irradiated with ultraviolet light of 253.7 nm for excitation, was about the same as the emission brightness of a conventional rare earth phosphate phosphor used as a standard phosphor. Further, the emission brightness of the phosphor of Example 1 after baked in the air at 800°C, as measured in the same manner as above, was 98% of one of the above standard phosphor, and the heat deterioration due to heat treatment of the phosphor was slight.

Further, the relative emission brightness of the phosphor at 200°C was 101% of one at 25°C, and no temperature quenching was confirmed.

### EXAMPLE 2

276 g of a rare earth phosphate of Example 2 was obtained in the same manner as in Example 1 using the first solution and the second solution prepared in Example 1, except that the first solution was dropwise added to the second solution to form a precipitate of a rare earth phosphate, and before separation by filtration, an alumina-containing slurry containing Al corresponding to 5,000 ppm of a theoretical yield of the rare earth phosphate as calculated from the blending amount of the raw materials was added thereto, followed by adequate stirring, and then filtration was conducted. The theoretical yield as calculated from the blending amount of the materials was 280.4 g, and accordingly the yield was 98%.

The rare earth phosphate of Example 2 had a composition of La_{0.55}Ce_{0.30}Tb_{0.15}(PO₄)_{1.02}, and had 4,370 ppm of Al attached thereto. This rare earth phosphate had a powder reflectance at a wavelength of 490 nm of 99% of the reflectance of a magnesium oxide powder, and no body color was confirmed in appearance.

Then, a rare earth phosphate phosphor of Example 2 having a compositional formula of La_{0.55}Ce_{0.30}Tb_{0.15}(PO₄)_{1.02} and having an Al content of 350 ppm was obtained in the same manner as in Example 1 except that the rare earth phosphate of Example 2 was used instead of the rare earth phosphate of Example 1 and no alumina was used.

The emission brightness of the rare earth phosphate phosphor of Example 2 when irradiated with ultraviolet light of 253.7 nm for excitation was about the same as the emission brightness of the standard phosphor used in Example 1. The emission brightness of the phosphor of Example 2 after baked in the air at 800°C, as measured in the same manner as above, was 98% of one of the above standard phosphor, and the heat deterioration due to heat treatment of the phosphor was slight.

Further, the relative emission brightness of the phosphor of Example 2 at 200°C was 101% of one at 25°C, and no temperature quenching was confirmed.

### COMPARATIVE EXAMPLE 1

76.1 g of cerium oxide (CeO₂), 38 g of terbium oxide (Tb₄O₇) and 139.4 g of lanthanum oxide (La₂O₃) were added to pure water, followed by thorough stirring to prepare a suspension of the rare earth oxides, and nitric acid having a specific gravity of 1.42 was gradually added thereto to dissolve the rare earth oxides. Here, in order that the rare earth oxides would be dissolved easily, the liquid temperature was raised to 60°C with stirring while adding 35% hydrogen peroxide thereto, to prepare 1,500 mℓ of a transparent aqueous solution of a rare earth nitrate having a total ion concentration of rare earth ions of Ce, Tb and La of 1.5 mol/ℓ as a first solution.

Separately, 66 g of 85% phosphoric acid was introduced in pure water, followed by heating to 60°C, and while keeping this temperature, 28% ammonium water was gradually added thereto until the pH of the liquid became 1.4, to prepare 500 mℓ of a solution of phosphoric acid having a pH of 1.4 as a second solution.

Then, the second solution was heated to 60°C, and the first solution having its temperature kept to be 60°C was dropwise added thereto at a dropping rate of 500 mℓ/hr, and 5.6% ammonium water was dropwise added together so that the pH value of the second solution would be always about 1.4, to form a precipitate of a rare earth phosphate, and the solution was kept for 1 hour under heating to 60°C. Here, the molar ratio of the total rare earth ions in the rare earth nitrate solution added dropwise, to the nitrate ions in the above solution of phosphoric acid, was 1:1.15.

The precipitate of a rare earth phosphate thus obtained was washed with pure water by decantation, separated by filtration, dried at 120°C and subjected to classification with a sieve of opening 60 micron to obtain 176 g of a rare earth phosphate of Comparative Example 1. The theoretical yield as calculated from the blending amount of the raw materials was 177.9 g, and accordingly the yield was 99%.

The composition of the rare earth phosphate of Comparative Example 1 was La_{0.55}Ce_{0.30}Tb_{0.15}(PO₄)_{1.06}, the powder reflectance at a wavelength of 490 nm was 98% of the reflectance of a magnesium oxide powder, and it presented slightly brown body color.

Then, a rare earth phosphate phosphor of Comparative Example 1 having a compositional formula of La_{0.55}Ce_{0.30}Tb_{0.15}PO₄ was obtained in the same manner as in Example 1 except that 120 g of the rare earth phosphate of Comparative Example 1 was used instead of 240 g of the rare earth phosphate of Example 1, the addition amount of lithium tetraborate (Li₂B₄O₇) was changed from 2.4 g to 1.2 g, and the addition amount of boric acid (H₃BO₃) was changed from 24 g to 12 g.

The emission brightness of the rare earth phosphate phosphor of Comparative Example 1 when irradiated with ultraviolet light of 253.7 nm for excitation was about the same as the emission brightness of the standard phosphor used in Example 1. The emission brightness of the phosphor of Comparative Example 1 after baked in the air at 800°C, as measured in the same manner as above, was 93% of one of the above standard phosphor, and decrease in the emission brightness due to heat deterioration of the phosphor was confirmed.

Further, the relative emission brightness of the phosphor of Comparative Example 1 at 200°C was 88% of one at 25°C, and significant temperature quenching was confirmed.

### COMPARATIVE EXAMPLE 2

49.2 g of cerium oxide (CeO₂), 28.0 g of terbium oxide (Tb₄O₇) and 89.6 g of lanthanum oxide (La₂O₃) were dissolved in nitric acid in the same manner as in Comparative Example 1 to prepare a rare earth nitrate solution, and oxalic acid was added thereto to coprecipitate an oxalate of rare earth elements Ce, Tb and La. The coprecipitate was separated by filtration, dried and calcined at 600°C for 1 hour to obtain a coprecipitated oxide of La, Ce and Tb. 169.3 g of said coprecipitated oxide and 132.1 g of diammonium hydrogen phosphate [(NH₄)₂HPO₄] were weighed, and they were adequately mixed and put in an alumina crucible and calcined in the air at 700°C for 2 hours.

This calcined product was cooled to room temperature, 2.4 g of lithium tetraborate (Li₂B₄O₇) as a flux and 24 g of boric acid (H₃BO₃) as a flux were added thereto, followed by thorough mixing, and the mixture was put in an alumina crucible and stepwise subjected to calcination, pulverization, washing, drying and classification in the same manner as in Example 1 to obtain a rare earth phosphate phosphor of Comparative Example 2 having a compositional formula of La_{0.55}Ce_{0.30}Tb_{0.15}PO₄.

The emission brightness of the rare earth phosphate phosphor of Comparative Example 2 when irradiated with ultraviolet light of 253.7 nm for excitation was 98% of the emission brightness of the standard phosphor used in Example 1. Further, the emission brightness of the phosphor of Comparative Example 2 after baked in the air at 800°C, as measured in the same manner as above, was 90% of one of the above standard phosphor, and the decrease in the emission brightness due to heat deterioration of the phosphor was significant.

Further, the relative emission brightness of the phosphor of Comparative Example 2 at 200°C was 80% of one at 25°C, and signification temperature quenching was confirmed.

According to the present invention, by employing the above constitution, a rare earth phosphate having no body color can be obtained, and when a rare earth phosphate phosphor using said rare earth phosphate is used for a fluorescent screen of a fluorescent lamp, decrease in the brightness in a heat treatment step is small, the initial brightness of the fluorescent lamp is high, and the brightness retention ratio in a case of continuous lighting is high as compared with a conventional rare earth phosphate phosphor.

Further, with the rare earth phosphate phosphor of the present invention containing a specific amount of Al, the temperature quenching of emission of the phosphor is significantly reduced as compared with a conventional rare earth phosphate phosphor containing no Al. Further, it is easy to control the particle size, and a rare earth phosphate precursor and a rare earth phosphate phosphor having a desired particle size can be obtained with a high yield.

The entire disclosure of Japanese Patent Application No. 11-357675 filed on December 16, 1999 including specification, claims, drawings and summary are incorporated herein by reference in its entirety.

## Claims

1. A rare earth phosphate which has a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, and which has a powder reflectance after calcination at a temperature of from 120 to 900°C in the air, of at least 99% of the reflectance of a MgO powder at a wavelength of 490 nm.

2. A process for producing a rare earth phosphate having a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, which comprises preparing a first solution containing Ln ions (Ln⁺³), cerium ions (Ce⁺³) and terbium ions (Tb⁺³) in amounts which stoichiometrically satisfy the above compositional formula and phosphate ions (PO₄⁻³) at a concentration higher than the stoichiometric amount which satisfies the above compositional formula, each in an ionic state, preparing a second solution containing nitrate ions (NO₃⁻¹) and ammonium ions (NH₄⁺¹), each in an ionic state, and having a pH within a range of from 1.0 to 2.0, and adding the first solution into the second solution to form a precipitate of a phosphate.

3. A process for producing a rare earth phosphate phosphor having a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, which comprises preparing a first solution containing Ln ions (Ln⁺³), cerium ions (Ce⁺³) and terbium ions (Tb⁺³) in amounts which stoichiometrically satisfy the above compositional formula and phosphate ions (PO₄⁺³) at a concentration higher than the stoichiometric amount which satisfies the above compositional formula, each in an ionic state, preparing a second solution containing nitrate ions (NO₃⁻¹) and ammonium ions (NH₄⁺¹), each in an ionic state, and having a pH within a range of from 1.0 to 2.0, adding the first solution into the second solution to precipitate a rare earth phosphate, and calcining said rare earth phosphate in a reducing atmosphere at a temperature of from 900 to 1,300°C.

4. A rare earth phosphate phosphor which has a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, and which contains from 1 to 500 ppm of aluminum (Al).

5. A process for producing a rare earth phosphate phosphor having a compositional formula of LnₓCe_{y}Tb_{z}PO₄ wherein Ln is at least one element selected from the group consisting of La, Gd and Y, and x, y and z are numbers which satisfy 0≦x<1, 0≦y≦1, 0≦z≦0.4 and x+y+z=1, which comprises preparing a first solution containing Ln ions (Ln⁺³), cerium ions (Ce⁺³) and terbium ions (Tb⁺³) in amounts which stoichiometrically satisfy the above compositional formula and phosphate ions (PO₄⁻³) at a concentration higher than the stoichiometric amount which satisfies the above compositional formula, each in an ionic state, preparing a second solution containing nitrate ions (NO₃⁻¹) and ammonium ions (NH₄⁻¹), each in an ionic state, and having a pH within a range of from 1.0 to 2.0, adding the first solution into the second solution to precipitate a rare earth phosphate, and calcining a mixture of said rare earth phosphate with from 10 to 50,000 ppm (as calculated as aluminum) of an aluminum compound in a reducing atmosphere at a temperature of from 900 to 1,300°C.
